(19) Europäisches Patentamt
European Patent Office
Office européen des brevets

(11) EP 2 294 313 B1

(12) **FASCICULE DE BREVET EUROPEEN**

(45) Date de publication et mention
de la délivrance du brevet:
**05.09.2012 Bulletin 2012/36**

(21) Numéro de dépôt: **09738352.5**

(22) Date de dépôt: **21.04.2009**

(51) Int Cl.:
**F03B 17/06** (2006.01)   **F03D 1/06** (2006.01)

(86) Numéro de dépôt international:
**PCT/FR2009/000469**

(87) Numéro de publication internationale:
**WO 2009/133318 (05.11.2009 Gazette 2009/45)**

(54) **PALE POUR APPAREIL DE GENERATION D'ENERGIE A PARTIR D'UN FLUIDE, ET APPAREIL COMPRENANT UN ROTOR FAISANT APPLICATION DE TELLES PALES**

SCHAUFEL FÜR EINE VORRICHTUNG ZUR ERZEUGUNG VON ENERGIE AUS EINEM FLUIDSTROM, SOWIE VORRICHTUNG MIT EINEM ROTOR UMFASSEND DIESE SCHAUFELN

BLADE FOR A DEVICE FOR GENERATING ENERGY FROM A FLUID FLOW AND DEVICE COMPRISING A ROTOR USING SAID BLADES

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **22.04.2008 FR 0802250**

(43) Date de publication de la demande:
**16.03.2011 Bulletin 2011/11**

(73) Titulaire: **NHEOLIS (SARL)**
**13015 Marseille (FR)**

(72) Inventeur: **HADDJERI, Nordine**
**F-13014 Marseille (FR)**

(74) Mandataire: **Marek, Pierre**
**Cabinet Marek**
**28, rue de la Loge**
**13235 Marseille Cédex 02 (FR)**

(56) Documents cités:
**WO-A-2005/015009    FR-A- 2 869 068**
**FR-A- 2 872 867    US-A- 4 086 026**

**Description**

La présente invention concerne une pale pour appareil de génération d'énergie à partir d'un écoulement fluidique pouvant être de l'air ou de l'eau.

Les préoccupations environnementales et le renchérissement des sources d'énergie fossile ont conduit ces dernières années à un regain d'intérêt pour des formes d'énergies alternatives en particulier dans le domaine de l'éolien.

Les solutions éoliennes les plus courantes consistent en des éoliennes à axe horizontal disposant d'une hélice s'étendant de manière perpendiculaire à la direction du vent et montée sur un mât.

Cette technologie est souvent utilisée pour des installations de dimensions imposantes.

Des solutions d'encombrement plus réduit ont par ailleurs été proposées en particulier pour des installations à proximité des bâtiments consommateurs d'énergie électrique. C'est dans ce cadre que s'inscrit le document FR A 2 872 867 divulguant un appareil de génération d'énergie grâce à la force du vent constitué d'un aérogénérateur disposant d'un rotor dont les pales sont de forme semi tronconique et quasi parallèle à leur axe de rotation. Essentiellement utilisé avec un axe de rotation horizontal, ce type d'appareil de génération d'énergie présente une compacité compatible avec de multiples zones d'installation notamment sur les toits de bâtiments.

Bien que ces aérogénérateurs offrent une efficacité globalement satisfaisante, toute amélioration de leur rendement serait grandement appréciable.

L'invention vise à améliorer le rendement de ce type d'appareil de génération d'énergie.

A cet effet, il est prévu selon l'invention une pale selon la revendication 1 pour appareil de génération d'énergie à partir d'un fluide, comprenant une surface motrice à l'intérieur de laquelle un fluide est destiné à s'écouler pour entraîner la pale en rotation autour d'un axe de rotation $\vec{X_0}$ définissant avec des axes $\vec{Y_0}$, $\vec{Z_0}$ un repère $\vec{X_0}$, $\vec{Y_0}$, $\vec{Z_0}$ orthogonal. La pale est délimitée par un bord d'attaque et un bord de fuite et se rétrécit entre le bord d'attaque et le bord de fuite. Elle s'étendant selon une fibre moyenne dont la projection sur le plan $\vec{X_0}$, $\vec{Y_0}$ présente une première courbure, le plan $\vec{X_0}$, $\vec{Y_0}$ étant défini de sorte à contenir la fibre moyenne au niveau du bord d'attaque. En plus,

la première courbure est agencée de sorte que dans le plan $\vec{X_0}$, $\vec{Y_0}$ la fibre moyenne s'éloigne de l'axe de rotation $\vec{X_0}$ depuis le bord d'attaque vers le bord de fuite. Selon un mode de réalisation alternatif, la première courbure est agencée de sorte que dans le plan $\vec{X_0}$, $\vec{Y_0}$ la fibre moyenne se rapproche de l'axe de rotation $\vec{X_0}$ depuis le bord d'attaque vers le bord de fuite.

Ainsi, l'invention prévoit une forme de pale très particulière lui permettant de capter une partie substantielle de l'énergie du fluide. L'invention contribue ainsi à améliorer significativement le rendement des appareils de génération d'énergie à partir d'un écoulement fluidique.

Facultativement, l'invention comporte au moins l'une quelconque des caractéristiques suivantes :

- de manière préférée la pale présente une première portion qui s'étend depuis le bord d'attaque vers le bord de fuite et qui est sensiblement parallèlement à l'axe de rotation $\vec{X_0}$. Elle présente une deuxième portion qui s'étend depuis la première portion vers le bord de fuite et qui est courbée. Cette courbure tend à éloigner, ou selon un mode de réalisation alternatif et particulièrement avantageux, à rapprocher le bord de fuite de l'axe $\vec{X_0}$. Cette courbure présente une direction sensiblement perpendiculaire au plan $\vec{X_0}$, $\vec{Y_0}$.

- la projection de la fibre moyenne sur le plan $\vec{Z_0}$, $\vec{X_0}$ présente une deuxième courbure.

- la fibre moyenne est contenue dans un plan P incliné d'un angle d par rapport au plan $\vec{X_0}$, $\vec{Y_0}$.
- l'angle d est compris entre 50° et 100° et préférentiellement entre 60° et 90°,
- de manière avantageuse, l'angle d est compris entre 55° et 65°,

- le plan P est sensiblement parallèle à l'axe $X_0$ ,

- la fibre moyenne présente dans le plan P une courbure principale uniforme,

- l'intersection des plans P et $\overrightarrow{X_0}$ , $\overrightarrow{Y_0}$ définit au niveau du bord d'attaque un point A appartenant à la fibre moyenne.

- la fibre moyenne comprend un point A au niveau du bord d'attaque, un point B inclus dans le plan $\overrightarrow{X_0}$ , $\overrightarrow{Y_0}$ et un point C au niveau du bord de fuite, de sorte que des portions AB et BC de la fibre moyenne respectivement délimitées par les points A et B et par les points B et C soient situées de part et d'autre du plan $\overrightarrow{X_0}$ , $\overrightarrow{Y_0}$ .

- la courbure de la fibre moyenne définit un creux compris entre 0% et 20% et préférentiellement entre 10% et 15%.
- la surface motrice présente un vrillage autour de la fibre moyenne.
- le vrillage est continu sur une partie au moins de la pale.
- la surface motrice présente un vrillage autour de la fibre moyenne sur la portion BC et ne présente pas de vrillage sur la portion AB.
- le vrillage de la portion BC est compris entre 40° et 80° et préférentiellement de l'ordre de 60°.
- le vrillage de la portion BC est continu.
- la portion AB ne présente sensiblement pas de vrillage.
- la surface motrice comprend une ouverture s'étendant de manière sensiblement parallèle à la fibre moyenne.

- en tout point $p_i$ de la fibre moyenne, la section de la surface motrice prise dans un plan $\overrightarrow{y_i}$ , $\overrightarrow{z_i}$ perpendiculaire au plan P présente une symétrie par rapport à un plan, $\overrightarrow{z_i}$ , $\overrightarrow{x_i}$ , les plans $\overrightarrow{y_i}$ , $\overrightarrow{z_i}$ et $\overrightarrow{z_i}$ , $\overrightarrow{x_i}$ étant définis par un repère orthogonal $\overrightarrow{x_i}$ , $\overrightarrow{y_i}$ , $\overrightarrow{z_i}$ dont le centre est confondu avec le point, dont l'axe $\overrightarrow{x_i}$ coïncide avec la tangente à la fibre moyenne (10) au point $p_i$ et est orientée vers le bord de fuite (5) et dont les axes $\overrightarrow{y_i}$ , $\overrightarrow{z_i}$ suivent ledit vrillage.

- la section de surface motrice présente sensiblement la forme d'une portion de cercle.
- le centre de la portion de cercle est situé sur la fibre moyenne.
- pour un diamètre $D_{attaque}$ de la section de la surface motrice prise au niveau du bord d'attaque, le diamètre $D_{fuite}$ de la section de la surface motrice prise au niveau de fuite est tel que : $\dfrac{D_{attaque}}{3,5} \leq D_{fuite} \leq \dfrac{D_{attaque}}{2,5}$ .

- la longueur L de la fibre moyenne entre le bord d'attaque et le bord de fuite est telle que : $D_{attaque} \cdot 3,5 \leq L \leq D_{attaque} \cdot 4,5$ .

- en chaque point $p_i$ de la fibre moyenne, le plan $\overrightarrow{z_i}$ , $\overrightarrow{x_i}$ est sensiblement équidistant des deux rebords délimitant l'ouverture contenu dans le plan $\overrightarrow{y_i}$ , $\overrightarrow{z_i}$ .

En outre, il est prévu selon l'invention un rotor pour appareil de génération d'énergie à partir d'un fluide comprenant au moins une pale selon l'une quelconque des caractéristiques précédentes.
On prévoit encore selon l'invention un appareil de génération d'énergie à partir d'un fluide comprenant une génératrice couplée à un tel rotor.
Le rotor est monté sur un mât vertical agencé pour s'orienter de lui même face à la direction du fluide. Préférentiellement cette orientation automatique ne nécessite par l'aide d'un système extérieur ou annexe autre que la traînée induite par l'écoulement du fluide.
D'autres caractéristiques, buts et avantages de la présente invention apparaîtront à la lecture de la description détaillée qui va suivre et au regard des dessins annexés donnés à titre d'exemple non limitatif et sur lesquels :

- la figure 1 est une vue en deux dimensions d'une pale selon un exemple de réalisation de l'invention dans le plan $\overrightarrow{X_0}$ , $\overrightarrow{Y_0}$ .

3

- la figure 2 est une vue en deux dimensions de la pale de la figure 1 dans le plan $Z_0$ , $X_0$ .

- la figure 3 est une vue en trois dimensions de la pale de la figure 1 dans le repère orthogonal $\overrightarrow{X_0}$ , $\overrightarrow{Y_0}$ , $\overrightarrow{Z_0}$ .

- la figure 4 est une vue en trois dimensions de la génération d'une pale selon un autre exemple de réalisation de l'invention.

- la figure 5 est une vue longitudinale d'un exemple de rotor équipé de trois pales selon l'exemple illustré en figure 4.

- la figure 6 est une vue selon l'axe $\overrightarrow{X_0}$ du rotor illustré en figure 5.

- les figures 7 et 8 illustrent deux vues d'un exemple de réalisation d'un rotor équipé de pales selon une variante de réalisation de l'invention.

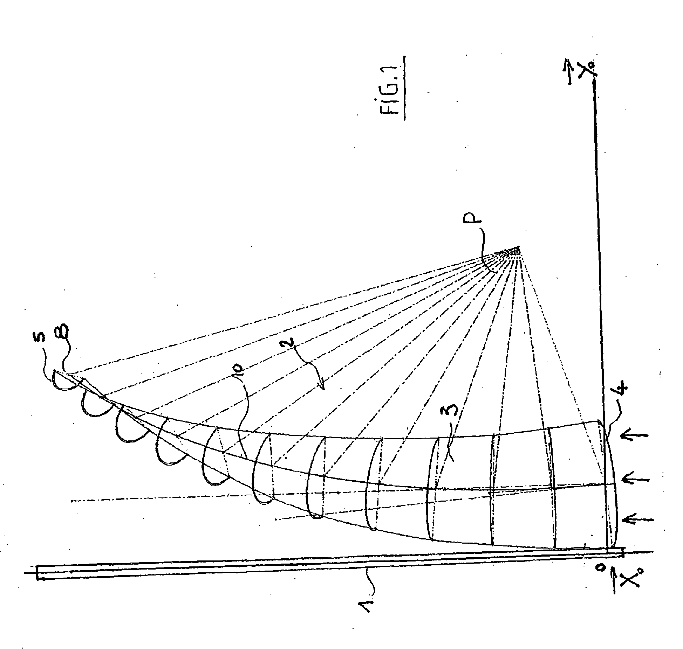

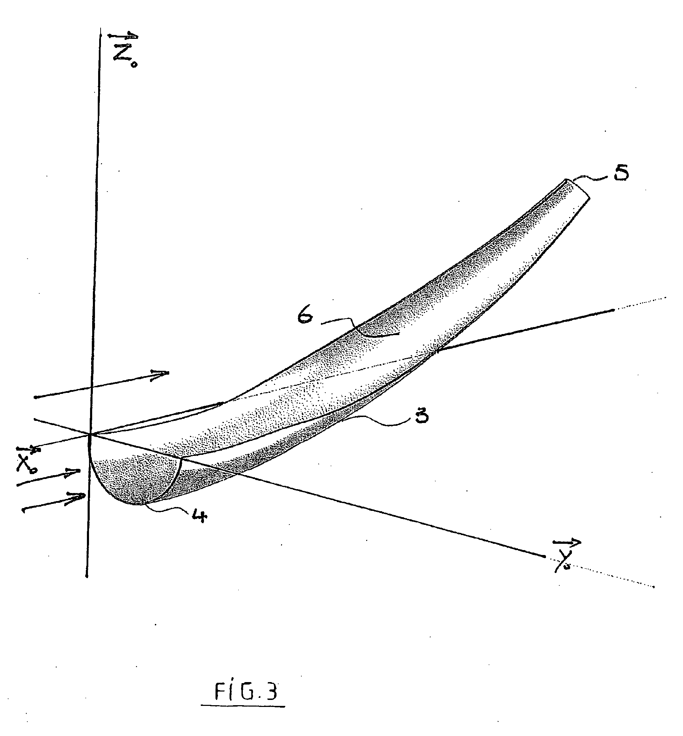

En référence aux figures 1 à 8, des exemples de pale selon l'invention vont maintenant être présentés. Ces figures font apparaître une pale 2 destinée à tourner sous l'effet d'un écoulement fluidique autour d'un axe de rotation $\overrightarrow{X_0}$ . L'axe de rotation $\overrightarrow{X_0}$ est matérialisé par un arbre 1 auquel la pale 2 est destinée à être liée en rotation lorsqu'elle équipe un appareil de génération d'énergie. Les pales 2 représentées sur les figures 1 à 8 sont agencées pour tourner autour de l'axe de rotation $\overrightarrow{X_0}$ dans le sens horaire tel qu'il est défini par le repère orthogonal $\overrightarrow{X_0}$ , $\overrightarrow{Y_0}$ , $\overrightarrow{Z_0}$ . Le sens et la direction de l'écoulement du fluide sont illustrés sur les figures 1 à 3 par des flèches.

La pale 2 comporte une surface motrice 3 délimitée en amont par un bord d'attaque 4 et en aval par un bord de fuite 5. La surface motrice 3 définit le volume à l'intérieur et le long duquel le fluide est destiné à s'écouler pour entraîner la pale 2 en rotation lors du fonctionnement.

La surface motrice 3 s'étend selon une fibre moyenne 10. La fibre moyenne 10 s'étend principalement selon une direction sensiblement parallèle à l'axe de rotation $\overrightarrow{X_0}$ et donc selon une direction sensiblement parallèle à la direction du vent. La pale 2 objet de la présente invention se différencie ainsi des nombreuses pales destinées à équiper des rotors sur lesquelles elles s'étendent perpendiculairement à l'axe du rotor.

En tout point $p_i$ de la fibre moyenne 10 on peut définir un repère orthogonal $\overrightarrow{x_i}$ , $\overrightarrow{y_i}$ , $\overrightarrow{z_i}$ dont le centre est confondu avec le point $p_i$ et dont l'axe $\overrightarrow{x_i}$ coïncide avec la tangente à la fibre moyenne 10 au point $p_i$ et est orienté vers le bord de fuite 5. Ainsi en chaque point pi, le plan $\overrightarrow{y_i}$ , $\overrightarrow{z_i}$ définit une section de la surface motrice 3.

La dimension des sections de la surface motrice 3 diminue depuis le bord d'attaque 4 jusqu'au bord de fuite 5. Cette diminution peut être continue ou discontinue. Dans les exemples illustrés sur les figures, la variation de la dimension des sections de surface motrice décroît de manière continue et linéaire depuis le bord d'entrée 4 vers le bord de fuite 5. La réduction de section favorise l'accélération du fluide au cours de son écoulement au sein de la surface motrice.

La fibre moyenne 10 est agencée de sorte que sa projection sur le plan $\overrightarrow{X_0}$ , $\overrightarrow{Y_0}$ présente une première courbure.

Au niveau du bord d'attaque 4, la fibre moyenne 10 coupe le plan $\overrightarrow{X_0}$ , $\overrightarrow{Y_0}$ . sur l'axe $\overrightarrow{Y_0}$ .

Cette courbure permet de mieux capter l'énergie du fluide tout au long de son écoulement le long de la surface motrice 3, notamment en accompagnant le fluide qui tente de s'échapper vers les zones qui opposent une moindre résistance.

De manière avantageuse la fibre moyenne 10 est agencée de sorte que sa projection sur le plan $\overrightarrow{Z_0}$ , $\overrightarrow{X_0}$ présente une deuxième courbure.

L'énergie cinétique du fluide peut ainsi être captée de manière plus efficace, entraînant par conséquent une amélioration sensible du rendement par rapport aux pales connues s'étendant principalement selon une direction parallèle à l'axe de rotation.

La surface motrice comporte une ouverture 6 sensiblement parallèle à la fibre moyenne 10.

Sur l'exemple représenté, l'ouverture 6 s'étend depuis le bord d'attaque 4 jusqu'au bord de fuite 5. Cette ouverture 6 définit deux rebords qui s'étendent également de manière sensiblement parallèle à la fibre moyenne 10. Ainsi, chacune des sections de la surface motrice prises dans un plan $\overrightarrow{y_i}$ , $\overrightarrow{z_i}$ définit un profil présentant une première et une deuxième extrémité correspondant respectivement à l'un desdits rebords.

La surface motrice 3 est conformée de sorte que la fibre moyenne 10 soit substantiellement confondue avec la ligne formée par l'ensemble des milieux des segments reliant ladite première extrémité à ladite deuxième extrémité.

Dans les modes de réalisation illustrés, en chacune desdites section de fibre moyenne 10 ledit profil est sensiblement symétrique par rapport à un axe de symétrie parallèle à l'axe $\overrightarrow{z_i}$ et passant par le milieu du segment reliant ladite première à ladite deuxième extrémité.

Avantageusement, le profil définit une portion de cercle. Plus particulièrement sur les exemples illustrés, le profil présente une forme de demi-cercle. Ainsi, la surface motrice 3 présente une forme semi conique dont l'axe est courbé.

De manière préférée, la surface motrice 3 présente un vrillage autour de la fibre moyenne 10. Ce vrillage est apparent sur les pales du mode de réalisation illustré en figures 1 à 6. La surface motrice 3 est conformée de sorte que le bord de fuite 5 soit décalé angulairement par rapport au bord d'attaque 4 dans le sens horaire lorsque la pale 2 est destinée à tourner dans le sens horaire. Ce vrillage est agencé pour que la surface motrice 3 suive les veines du fluide afin d'accroître le transfert d'énergie entre le fluide et la surface motrice 3.

Le vrillage peut être continu ou non. Par ailleurs, il peut s'étendre sur l'ensemble de la fibre moyenne 10 ou sur une portion seulement de cette dernière. Sur l'exemple représenté, une première portion de pale 2 s'étendant depuis le bord d'attaque 4 jusqu'à la section contenant le point B n'est pas vrillée par rapport au segment reliant les 2 extrémités de la section d'entrée 4. De préférence, ce dernier segment est quasiment confondu avec l'axe $\overrightarrow{Y_0}$ . Une deuxième portion de pale 2 s'étendant depuis la première portion jusqu'au bord de fuite 5 est vrillée. De manière avantageuse, la première portion de pale 2 s'étend sur environ un tiers de la longueur de la pale.

La forme concave de la pale détermine un creux qui peut être compris entre 0% et 20% tout au long de la pale et préférentiellement entre 10% et 15%.

Cette forme contribue à créer une dépression sur l'extrados de la pale de sorte à favoriser une première force aérodynamique qui engendre un couple d'entraînement du rotor.

Le rétrécissement continu de la section de la pale accélère le fluide alors que la courbure de la ligne moyenne tend à opposer au fluide un angle d'incidence plus grand et dirigé vers l'extérieur de sorte à capter le fluide qui est dévié dans ce sens et s'échappe vers les parties opposant une moindre résistance.

L'agencement particulier de la surface motrice 3 impose au fluide en écoulement une restitution optimisée de son énergie. Il permet par conséquent d'améliorer très significativement le rendement des pales s'étendant principalement de manière parallèle à l'axe de rotation.

En résumé, la configuration de la pale met ainsi en jeu au moins deux types de forces aérodynamiques :

- la première est la résultante de la compression sur l'intrados et de la dépression sur l'extrados, forces qui sont favorisées par la courbure de la pale engendrant un creux (qui peut être adapté aux conditions de vitesse du fluide sur le lieu d'implantation de la machine). Le fluide qui est dévié par la forme même de la pale a un angle d'incidence qui varie ; à chaque angle d'incidence, la pale présentera toujours un creux générant une force aérodynamique qui au total sera la résultante de toutes les forces de ce type que chacun des creux élémentaires qui composent la pale aura générées ;
- la deuxième force est issue du phénomène de Bernoulli où le fluide est accéléré quand la section de la canalisation dans laquelle il s'écoule diminue. La réduction de section, la courbure et le vrillage captent ainsi l'énergie provenant de ce phénomène.

La résultante finale est la combinaison de ces effets.

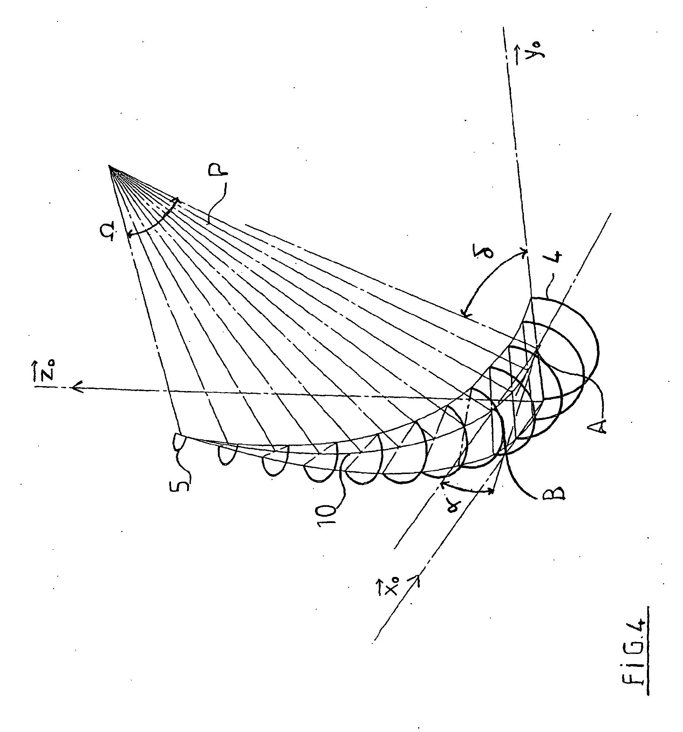

L'exemple de pale 2 illustrée sur les figures 4 à 6 va maintenant être décrit plus en détail.

Une telle pale 2 reprend les caractéristiques de la pale décrite précédemment. Elle est agencée de sorte que sa fibre moyenne 10 soit contenue dans un plan P.

L'axe $\overrightarrow{Y_0}$ est tel que l'intersection de la fibre moyenne 10 et du plan $\overrightarrow{X_0}$ , $\overrightarrow{Y_0}$ définisse un point A appartenant à la fibre moyenne 10 et situé sensiblement au niveau du bord d'attaque 4.

Ce plan P est incliné d'un angle d par rapport au plan $\overrightarrow{X_0}$ , $\overrightarrow{Y_0}$ .

Avantageusement, l'angle d est compris entre 50° et 90° et préférentiellement entre 55 et 65°. De manière encore plus avantageuse il est sensiblement égal à 60°.

La courbure de la fibre moyenne 10 dans le plan P est désignée par la suite courbure principale. De manière préférée, la courbure principale est sensiblement constante. Cette courbure principale présente un rayon de courbure $R_p$ compris entre L/2 et 10L et préférentiellement entre 0,7L et L.

Ainsi, pour cet exemple de pale 2 comme pour ceux illustrés sur les figures 1 à 3 et 7 à 8, la projection de la fibre moyenne sur le plan $\overrightarrow{X_0}$ , $\overrightarrow{Y_0}$ présente une première courbure, et la projection de la fibre moyenne sur le plan $\overrightarrow{Z_0}$ $\overrightarrow{X_0}$ présente une deuxième courbure.

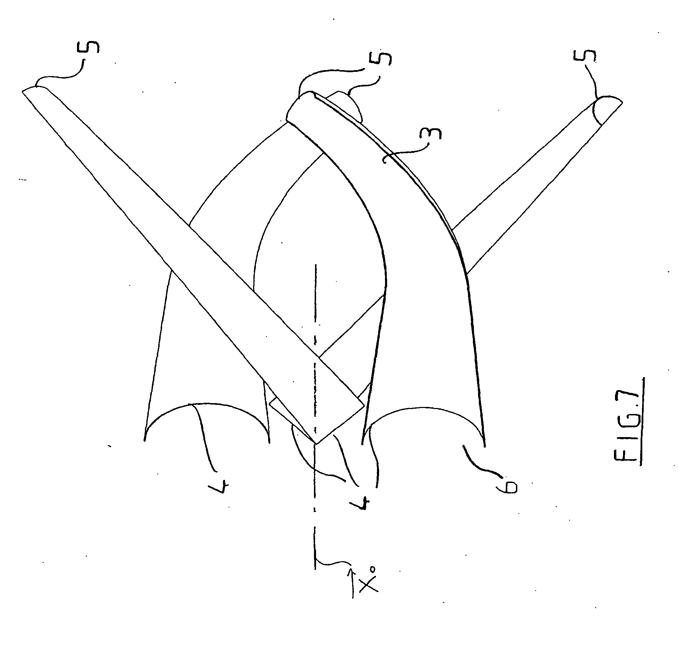

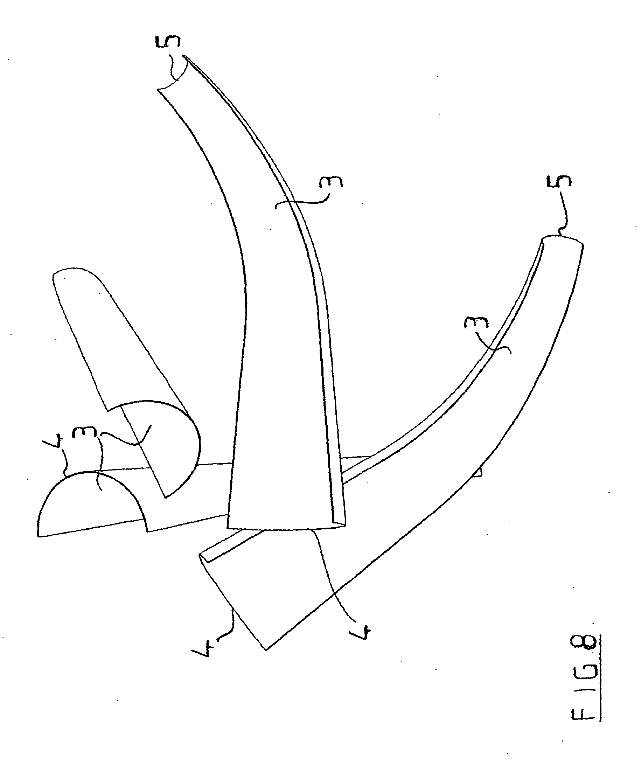

Tel que l'illustre le mode de réalisation représenté sur les figures 1 à 6, la courbure principale est conformée de sorte que la fibre moyenne 10 s'éloigne de l'axe de rotation $\overrightarrow{X_0}$ depuis le bord d'attaque 4 vers le bord de fuite 5. Selon un autre mode de réalisation illustré en figures 7 et 8, la courbure principale est conformée de sorte que la fibre moyenne se rapproche de l'axe de rotation $\overrightarrow{X_0}$ depuis le bord d'attaque vers le bord de fuite. Ce mode de réalisation est particulièrement avantageux en terme de rendement.

De manière avantageuse le point A est situé sur l'axe $\overrightarrow{Y_0}$ et le plan P est sensiblement parallèle à l'axe $\overrightarrow{X_0}$ .

Dans l'exemple illustré en figures 1 à 6, entre le bord d'attaque 4 et le bord de fuite 5, la fibre moyenne 10 comprend un point B qui est inclus dans le plan $\overrightarrow{X_0}$ , $\overrightarrow{Y_0}$ . Par ailleurs, la fibre moyenne 10 définit un point C au niveau du bord de fuite 5. La fibre moyenne 10 comporte ainsi deux portions respectivement délimitées par les points A et B et par les points B et C et respectivement désignées portion AB et portion BC.

La pale 2 est agencée de sorte que les portions AB et BC soient situées de part et d'autre du plan $\overrightarrow{X_0}$ , $\overrightarrow{Y_0}$ . Dans l'exemple représenté les coordonnées du point A sur l'axe $\overrightarrow{Y_0}$ sont positives. Les coordonnées des points de la ligne moyenne formant la portion AB sur l'axe $\overrightarrow{Z_0}$ sont négatives et les coordonnées de la ligne moyenne formant la portion BC sur l'axe $\overrightarrow{Z_0}$ sont positives.

La tangente à la fibre moyenne 10 au point A fait avec le plan $\overrightarrow{X_0}$ , $\overrightarrow{Y_0}$ un angle d'environ 13°.

Avantageusement la longueur de la portion AB est environ égale au tiers de la longueur de la portion AC.

La surface motrice 3 présente un vrillage autour de la fibre moyenne 10. Ce vrillage se déploie dans un sens horaire depuis le bord d'attaque 4 vers le bord de fuite 5.

Avantageusement, la surface motrice 3 présente un vrillage autour de la fibre moyenne 10 sur la portion BC et ne présente pas de vrillage sur la portion AB.

De manière préférée le vrillage est continu sur la portion BC. Il est compris entre 40° et 80° et préférentiellement de l'ordre de 60°.

Ainsi, cette pale permet de combiner, entre autres, une force aérodynamique résultant de la compression et de la dépression créées tout au long de la pale 2 et une accélération du fluide générée par l'effet BERNOULLI. Par ailleurs ces effets engendrés par la pale 2 sont générés en trois dimensions contrairement aux pales connues qui canalisent le fluide dans un espace en deux dimensions.

Les effets aérodynamiques associés aux portions AB et BC sont sensiblement similaires aux effets associés respectivement aux première et deuxième portions de la pale décrite précédemment en référence aux figures 1 à 3.

Comme pour les pales 2 illustrées en figures 1 à 3 et 7 à 8, la surface motrice 3 comprend une ouverture 6 s'étendant de manière sensiblement parallèle à la fibre moyenne 10 et les sections de surface motrice 3 présentent sensiblement la forme d'un demi cercle.

La surface motrice 3 peut être formée d'une seule pièce. La figure 4 montre la génération géométrique de la pale. Elle sert à faire le moule à partir duquel la pale sera obtenue.

Il s'est avéré qu'une pale 2 selon l'invention et dont les dimensions vérifient les ratios suivants présente un rendement particulièrement élevé :

$$\frac{D_{attaque}}{4} \leq D_{fuite} \leq \frac{D_{attaque}}{2} \text{ et } D_{attaque} \cdot 3 \leq L \leq D_{attaque} \cdot 5$$

Plus particulièrement,

$$\frac{D_{attaque}}{3,5} \leq D_{fuite} \leq \frac{D_{attaque}}{2,5} \text{ et } D_{attaque} \cdot 3,5 \leq L \leq D_{attaque} \cdot 4,5$$

Plus particulièrement,

$$D_{fuite} = \frac{D_{attaque}}{3} \text{ et } L = 4\ D_{attaque}$$

Avec

- $D_{attaque}$ = dimension caractéristique de la section de la surface motrice au niveau du bord d'attaque. Dans le cas d'une section en forme de demi-cercle, $D_{attaque}$ correspond au diamètre de ladite section au niveau du bord d'attaque.
- $D_{fuite}$= dimension caractéristique de la section de la surface motrice au niveau du bord de fuite. Dans le cas d'une section en forme de demi-cercle, $D_{fuite}$ correspond au diamètre de ladite section au niveau du bord de fuite.
- L = longueur de la corde de la fibre moyenne 10 entre les bords d'attaque et de fuite.

A titre d'exemple, la pale 2 illustrée sur les figures 4 à 6 présente les dimensions suivantes :

- longueur de la fibre moyenne L = 2 mètres ; $D_{attaque}$ = 0,50 m; $D_{fuite}$ =0,17 m; Rp rayon de la courbure principale=1,60 m; angle d=60°, angle interceptant l'arc de la fibre moyenne O=72°

La longueur de la fibre moyenne est adaptée à la production de l'énergie souhaitée et ceci jusqu'aux grandes énergies de l'ordre du MégaWatt.

Comme indiqué précédemment, l'invention a également pour objet un rotor pour appareil de génération d'énergie à partir d'un écoulement fluidique.

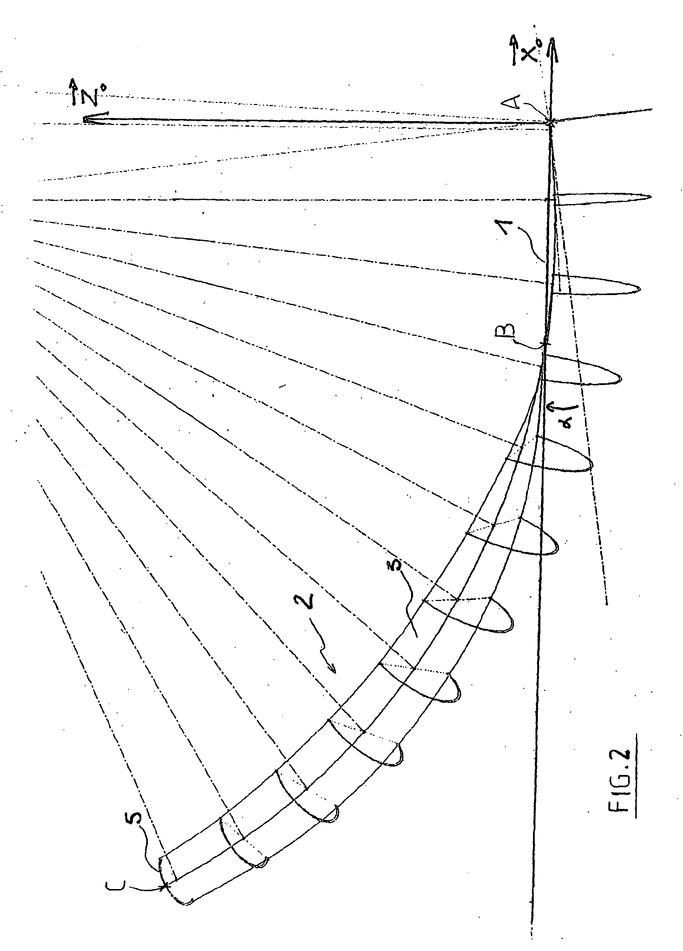

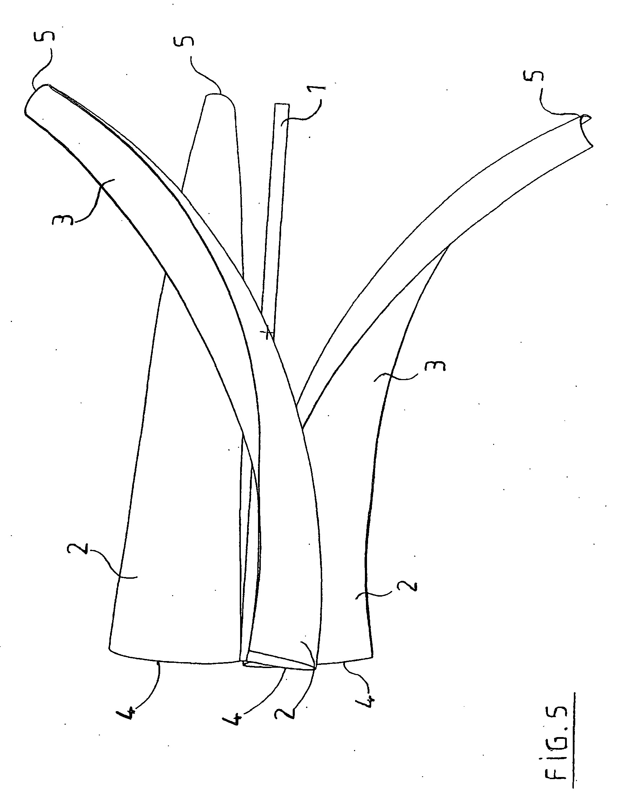

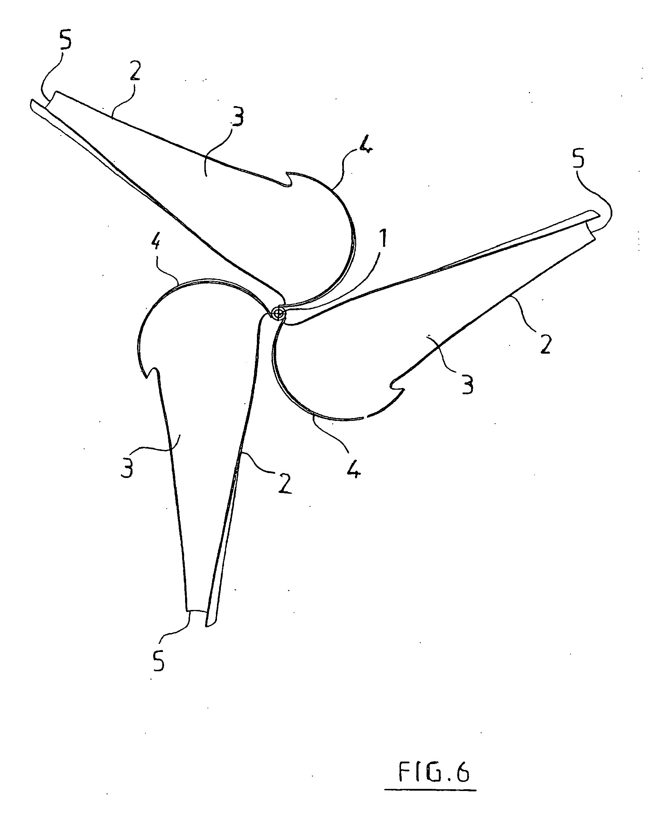

Un tel rotor comprend un arbre 1 représenté en figure 1 et 2 ainsi qu'au moins une pale 2. Comme illustré sur les figures 5 et 6 le rotor est équipé de trois pales réparties autour de l'arbre et séparées les unes des autres par un angle de 120°. Le nombre de pales peut être réduit ou augmenté.

La pale 2 comprend dés moyens de fixation non représentés, pour lier la surface motrice 3 à l'arbre 1 du rotor. Les moyens de liaison sont bien connus de l'homme du métier comme l'illustre le document FR 2 872 867.

Lorsque les pales sont montées sur l'arbre, le bord d'attaque définit avec l'arbre $\overrightarrow{X_0}$ dans le plan $\overrightarrow{Z_0}$ , $\overrightarrow{X_0}$

un angle a désigné angle d'incidence. On rappelle ici que l'axe $\overrightarrow{X_0}$ autour duquel la pale 2 est destinée à tourner est sensiblement parallèle à la direction du vent.

L'angle d'incidence a est compris entre -20° et 40° et plus avantageusement entre -15° et 30°. De manière encore plus avantageuse, l'angle d'incidence a est compris entre. -15° et 10°.

Le rotor est agencé de sorte à limiter au maximum la distance entre l'arbre 1 et la surface motrice 3 afin de diminuer les sollicitations mécaniques des pièces constituant le rotor. Ainsi, comme représenté sur les figures 5 et 6, la surface motrice 3 est juxtaposée à l'arbre 1.

La trace du plan P dans le plan XY est une droite qui est parallèle à l'axe X mais qui peut aussi présenter avec cet axe un angle ß désigné angle d'inclinaison.

L'angle d'inclinaison ß est compris entre 0° et 30° et plus avantageusement entre 0° et 20 °. De manière encore plus avantageuse, l'angle d'incidence ß est compris entre 0° et 12°.

De manière préférée, les moyens de liaison sont agencés afin d'asservir l'angle d'incidence a et/ou l'angle d'inclinaison ß en fonction de la vitesse du vent. Ainsi, on peut prévoir d'asservir l'angle d'incidence a de manière à ce que la vitesse de rotation du rotor demeure sensiblement constante quelle que soit la vitesse du vent.

Sur la variante de réalisation illustrée en figures 7 et 8, le rotor comprend 4 pales. La fibre moyenne de chacune de ces pales est comprise dans un plan P et leurs deux rebords respectifs définis par l'ouverture 6 sont également compris dans un plan. Cette dernière caractéristique apparaît clairement sur deux des pales de la figure 7. Cette pale reprend les caractéristiques des pales décrites précédemment en référence aux figures 1 à 6. Elle ne présente cependant pas obligatoirement de vrillage autour de la fibre moyenne. La fibre moyenne présente une courbure. Cette courbure tend à rapprocher le bord de fuite 5 de l'axe de rotation $\overrightarrow{X_0}$.

L'invention porte en outre sur un appareil de génération d'énergie comportant une nacelle sur laquelle le rotor est monté libre en rotation autour de l'axe $\overrightarrow{X_0}$ ainsi qu'une génératrice d'énergie couplée au rotor.

De manière avantageuse, l'appareil comprend des moyens de rotation pour orienter l'arbre 1 du rotor de façon sensiblement parallèle à la direction du vent.

On peut également prévoir que la nacelle soit montée en rotation sur un mât s'étendant sensiblement verticalement lorsque la direction du fluide est horizontale. Par ailleurs, on peut prévoir que l'appareil soit agencé de sorte que la force de traînée oriente le système face au fluide sans nécessiter de moyens additionnels de rotation.

Les pales objets de la présente invention ont permis d'obtenir des appareils de génération d'énergie dont les rendements sont substantiellement supérieurs à ceux des appareils de génération d'énergie connus.

La pale selon l'invention peut aussi être définie par l'un des procédés permettant son obtention. Un tel procédé consiste à disposer d'une pale comprenant une surface motrice à l'intérieur de laquelle un fluide est destiné à s'écouler pour entraîner la pale en rotation autour d'un axe de rotation $\overrightarrow{X_0}$, la pale étant délimitée par un bord d'attaque et un bord de fuite et la surface motrice se rétrécissant entre le bord d'attaque et le bord de fuite. Par ailleurs ce procédé comprend une étape dans laquelle on dispose la pale de sorte que la surface motrice s'étende selon une fibre moyenne contenue dans un plan P. En outre, on agence la surface motrice de manière à ce que le plan P soit incliné d'un angle d par rapport au plan orthogonal $\overrightarrow{X_0}$, $\overrightarrow{Y_0}$ le plan $\overrightarrow{X_0}$, $\overrightarrow{Y_0}$ étant tel qu'au niveau du bord d'attaque, la fibre moyenne coupe ce plan.

On peut également prévoir une étape consistant à courber la fibre moyenne dans le plan P.

On peut prévoir que cette courbure tende à éloigner le bord de fuite de l'axe $\overrightarrow{X_0}$ comme représenté sur les figures 1 à 6. Dans un mode de réalisation alternatif, on prévoit que cette courbure tende à rapprocher le bord de fuite de l'axe de rotation $\overrightarrow{X_0}$. Ce mode de réalisation améliore significativement le rendement de l'éolienne.

On peut en outre prévoir une étape de vrillage de la surface motrice autour de la fibre moyenne.

Selon encore un autre mode de réalisation, la surface motrice présente une première courbure dont la direction de courbure, désignée première direction de courbure, est sensiblement perpendiculaire à l'axe de rotation $\overrightarrow{X_0}$ et une deuxième courbure, désignée deuxième direction de courbure, dont la direction de courbure est sensiblement inclinée par rapport à la première direction de courbure. Avantageusement la deuxième direction de courbure est sensiblement perpendiculaire à la première direction de courbure. Plus particulièrement elle est sensiblement perpendiculaire au plan $\overrightarrow{Z_0}$, $\overrightarrow{X_0}$.

De manière avantageuse, la pale comprend une première portion qui s'étend depuis le bord d'attaque vers le bord de fuite et dont la courbure est sensiblement nulle selon la première direction de courbure. Elle comprend une deuxième portion qui s'étend depuis la première portion vers le bord de fuite et présentant une courbure selon la première direction de courbure. Cette première courbure tend à rapprocher le bord de fuite de l'axe de rotation $\overrightarrow{X_0}$.

Cette double courbure permet d'améliorer le transfert d'énergie entre le fluide et la pale. Elle augmente le rendement de cette dernière.

On désigne direction de courbure la direction de l'axe, ou des axes parallèles entre eux, autour duquel ou desquels il conviendrait de déformer la pale pour obtenir une courbure souhaitée. Une même portion de pale peut présenter plusieurs directions de courbure.

La pale peut présenter selon une même direction de courbure, une courbure constante (même axe, même rayon), ou une courbure dont le rayon varie et/ou présentant plusieurs axes de courbures parallèles à cette même direction de courbure. Avantageusement, chacune des première et deuxième courbures est constante sur la portion de pale courbée.

La pale selon le mode de réalisation précédent peut aussi être définie par l'un des procédés permettant son obtention. Un tel procédé consiste à disposer d'une pale comprenant une surface motrice à l'intérieur de laquelle un fluide est destiné à s'écouler pour entraîner la pale en rotation autour d'un axe de rotation $\overrightarrow{X_0}$, la pale étant délimitée par un bord d'attaque et un bord de fuite et la surface motrice se rétrécissant entre le bord d'attaque et le bord de fuite. La pale présente par exemple une forme semi tronconique.

On prévoit une étape consistant à courber la pale, au moins sur une portion s'étendant depuis le bord de fuite vers le bord d'attaque, selon une première direction de courbure.

On prévoit également une étape consistant à courber la pale, au moins sur cette même portion, selon une deuxième direction de courbure sensiblement inclinée par rapport à la première direction de courbure. La deuxième direction de courbure peut être sensiblement perpendiculaire à la première direction de courbure.

De manière préférée, la première direction de courbure est sensiblement perpendiculaire au plan $\overrightarrow{X_0}$ , $\overrightarrow{Y_0}$ et la deuxième direction de courbure est sensiblement perpendiculaire au plan $\overrightarrow{Z_0}$ , $\overrightarrow{X_0}$ .

Ces deux étapes de courbure de la pale peuvent être effectuées de sorte que la fibre moyenne demeure dans le plan P incliné d'un angle d par rapport au plan orthogonal $\overrightarrow{X_0}$ , $\overrightarrow{Y_0}$ et mentionné précédemment.

On peut en outre prévoir une étape de vrillage de la surface motrice autour de la fibre moyenne.

Par ailleurs, le profil des bords d'attaque 4 et de fuite 5 pourront faire l'objet d'ajustement sans pour autant que la fibre moyenne présente sur l'essentielle de sa longueur les caractéristiques mentionnées précédemment.

En outre, ce type de pale peut être utilisé avec tout type de fluide et notamment avec de l'air ou de l'eau.

REFERENCES

1. Arbre
2. Pale
3. Surface motrice
4. Bord d'attaque
5. Bord de fuite
6. Ouverture
7. $D_{attaque}$
8. $D_{fuite}$
9. Longueur de corde
10. Fibre moyenne

**Revendications**

1. Pale (2) pour appareil de génération d'énergie à partir d'un fluide, comprenant une surface motrice (3)

- à l'intérieur de laquelle un fluide est destiné à s'écouler pour entraîner la pale (2) en rotation autour d'un axe de rotation $\overrightarrow{X_0}$ définissant avec des axes $\overrightarrow{Y_0}$ , $\overrightarrow{Z_0}$ un repère $\overrightarrow{X_0}$ , $\overrightarrow{Y_0}$ , $\overrightarrow{Z_0}$ orthogonal,

- délimitée par un bord d'attaque (4) et un bord de fuite (5),
- se rétrécissant entre le bord d'attaque (4) et le bord de fuite (5),

- s'étendant selon une fibre moyenne (10),

- **caractérisée en ce que** la projection de la fibre moyenne (10) sur le plan $\overrightarrow{X_0}$ , $\overrightarrow{Y_0}$ présente une première courbure agencée de sorte que dans le plan $\overrightarrow{X_0}$ , $\overrightarrow{Y_0}$ la fibre moyenne s'éloigne ou se rapproche de l'axe de rotation $\overrightarrow{X_0}$ depuis le bord d'attaque vers le bord de fuite, le plan $\overrightarrow{X_0}$ , $\overrightarrow{Y_0}$ étant défini de sorte à contenir la fibre moyenne (10) au niveau du bord d'attaque (4).

2. Pale (2) selon la revendication précédente, dans laquelle la projection de la fibre moyenne (10) sur le plan $\overrightarrow{Z_0}$ , $\overrightarrow{X_0}$ présente une deuxième courbure.

3. Pale (2) selon l'une quelconque des revendications 1 ou 2, dans laquelle la fibre moyenne (10) est contenue dans un plan P incliné d'un angle d par rapport au plan $\overrightarrow{X_0}$ , $\overrightarrow{Y_0}$ .

4. Pale (2) selon la revendication précédente, dans laquelle angle d est compris entre 50° et 90° et préférentiellement entre 55° et 65°.

5. Pale (2) l'une quelconque des revendications 3 ou 4, dans laquelle le plan P est sensiblement parallèle à l'axe $\overrightarrow{X_0}$ .

6. Pale (2) selon l'une quelconque des revendications 3 à 5, dans laquelle la fibre moyenne présente dans le plan P une courbure principale de rayon constant.

7. Pale (2) selon l'une quelconque des revendications précédentes, dans laquelle la fibre moyenne (10) comprend un point A au niveau du bord d'attaque, un point B inclut dans le plan $\overrightarrow{X_0}$ , $\overrightarrow{Y_0}$ et un point C au niveau du bord de fuite (5), de sorte que des portions AB et BC de la fibre moyenne respectivement délimitées par les points A et B et par les points B et C soient situées de part et d'autre du plan $\overrightarrow{X_0}$ , $\overrightarrow{Y_0}$ la portion AB de la fibre moyenne (10) définissant par rapport au plan $\overrightarrow{X_0}$ , $\overrightarrow{Y_0}$ un creux compris entre 10% et 15%.

8. Pale (2) selon l'une quelconque des revendications précédentes, dans laquelle la surface motrice (3) présente un vrillage autour de la fibre moyenne (10).

9. Pale (2) selon la revendication précédente prise en combinaison avec la revendication 7, dans laquelle la surface motrice (3) présente sur la portion BC un vrillage autour de la fibre moyenne (10) compris entre 40° et 80° et préférentiellement de l'ordre de 60°et ne présente pas de vrillage sur la portion AB.

10. Pale (2) selon l'une quelconque des revendications précédentes, dans laquelle la surface motrice (3) comprend une ouverture (6) s'étendant de manière sensiblement parallèle à la fibre moyenne (10).

11. Pale (2) selon les revendications 5 et 8 dans laquelle en tout point $p_i$ de la fibre moyenne (10) la section de la surface motrice (3) prise dans un plan $\overrightarrow{y_i}$ , $\overrightarrow{z_i}$ perpendiculaire au plan P présente une symétrie par rapport à un plan $\overrightarrow{z_i}$ , $\overrightarrow{x_i}$ , les plans $\overrightarrow{y_i}$ , $\overrightarrow{z_i}$ et $\overrightarrow{z_i}$ , $\overrightarrow{x_i}$ étant définis par un repère orthogonal $\overrightarrow{x_i}$ , $\overrightarrow{y_i}$ , $\overrightarrow{z_i}$ dont le centre est confondu avec le point $p_i$, dont l'axe $\overrightarrow{x_i}$ coïncide avec la tangente à la fibre moyenne (10) au point $p_i$ et est orientée vers le bord de fuite (5) et dont les axes $\overrightarrow{y_i}$ , $\overrightarrow{z_i}$ suivent ledit vrillage.

**12.** Pale (2) selon la revendication précédente, dans laquelle la section de surface motrice (3) présente sensiblement la forme d'une portion de cercle.

**13.** Pale (2) selon la revendication précédente, dans laquelle pour un diamètre $D_{attaque}$ (7) de la section de la surface motrice (3) prise au niveau du bord d'attaque (4), le diamètre $D_{fuite}$ (8) de la section de la surface motrice (3) prise au niveau de fuite est tel que $\dfrac{D_{attaque}}{3,5} \leq D_{fuite} \leq \dfrac{D_{attaque}}{2,5}$ .

**14.** Pale selon l'une quelconque des revendications 12 ou 13, dans laquelle pour un diamètre $D_{attaque}$ (7) de la section de la surface motrice (3) prise au niveau du bord d'attaque, la corde entre le bord d'attaque (4) et le bord de fuite (5) présente une longueur L (9) telle que : $D_{attaque} \cdot 3,5 \leq L \leq D_{attaque} \cdot 4,5$ .

**15.** Appareil de génération d'énergie à partir d'un fluide comprenant un rotor comportant au moins une pale (2) selon l'une quelconque des revendications précédentes.

**Claims**

**1.** Blade (2) for a device for generating energy from a fluid, comprising a driving surface (3)

- inside which a fluid is intended to flow in order to rotate the blade (2) around a rotation axis $\overrightarrow{X_0}$ which defines with axes $\overrightarrow{Y_0}, \overrightarrow{Z_0}$ an orthogonal reference frame $\overrightarrow{X_0}, \overrightarrow{Y_0}, \overrightarrow{Z_0}$,
- bounded by a leading edge (4) and a trailing edge (5),
- narrowing between the leading edge (4) and the trailing edge (5),
- extending along a neutral fibre (10),
- **characterised in that** the projection of the neutral fibre (10) onto the plane $\overrightarrow{X_0}, \overrightarrow{Y_0}$ has a first curvature arranged so that in the plane $\overrightarrow{X_0}, \overrightarrow{Y_0}$ the neutral fibre moves away from or toward the rotation axis $\overrightarrow{X_0}$ from the leading edge to the trailing edge, the plane $\overrightarrow{X_0}, \overrightarrow{Y_0}$ being defined so as to contain the neutral fibre (10) along the leading edge (4).

**2.** Blade (2) according to the preceding claim, wherein the projection of the neutral fibre (10) onto the plane $\overrightarrow{Z_0}, \overrightarrow{X_0}$ has a second curvature.

**3.** Blade (2) according to either one of claims 1 or 2, wherein the neutral fibre (10) is contained in a plane P inclined at an angle d in relation to the plane $\overrightarrow{X_0}, \overrightarrow{Y_0}$.

**4.** Blade (2) according to the preceding claim, wherein angle d is comprised between 50° and 90° and preferably between 55° and 65°.

**5.** Blade (2) according to either one of claims 3 or 4, wherein plane P is substantially parallel to the $\overrightarrow{X_0}$ axis.

**6.** Blade (2) according to any one of claims 3 to 5, wherein the neutral fibre has in plane P a main curvature of constant radius.

**7.** Blade (2) according to any one of the preceding claims, wherein the neutral fibre (10) comprises a point A on the leading edge, a point B included in the plane $\overrightarrow{X_0}, \overrightarrow{Y_0}$ and a point C on the trailing edge (5), so that portions AB and BC of the neutral fibre respectively bounded by points A and B and by points B and C are located on either side of

plane $\overrightarrow{X_0}$, $\overrightarrow{Y_0}$ the portion AB of the neutral fibre (10) defining in relation to plane $\overrightarrow{X_0}$, $\overrightarrow{Y_0}$ la cavity comprised between 10% and 15%.

8. Blade (2) according to any one of the preceding claims, wherein the driving surface (3) has a twist around the neutral fibre (10).

9. Blade (2) according to the preceding claim taken in combination with claim 7, wherein the driving surface (3) has on portion BC a twist around the neutral fibre (10) comprised between 40° and 80° and preferably in the order of 60° and has no twist on portion AB.

10. Blade (2) according to any one of the preceding claims, wherein the driving surface (3) comprises an opening (6) extending substantially parallel to the neutral fibre (10).

11. Blade (2) according to claims 5 and 8 wherein at any point $p_i$ of the neutral fibre (10) the section of the driving surface (3) taken in a plane $\overrightarrow{y_i}$, $\overrightarrow{z_i}$ perpendicular to plane P is symmetrical in relation to plane $\overrightarrow{z_i}$, $\overrightarrow{x_i}$, the planes $\overrightarrow{y_i}$, $\overrightarrow{z_i}$ and $\overrightarrow{z_i}$, $\overrightarrow{x_i}$ being defined by an orthogonal reference frame $\overrightarrow{x_i}$, $\overrightarrow{y_i}$, $\overrightarrow{z_i}$ the centre of which coincides with the point $p_i$, the $\overrightarrow{x_i}$ axis of which coincides with the tangent to the neutral fibre (10) at point $p_i$ and is directed toward the trailing edge (5) and the $\overrightarrow{y_i}$, $\overrightarrow{z_i}$ axes of which follow said twist.

12. Blade (2) according to the preceding claim, wherein the section of driving surface (3) is substantially in the shape of a portion of a circle.

13. Blade (2) according to the preceding claim, wherein for a diameter $D_{leading}$ (7) of the section of the driving surface (3) taken at the leading edge (4), the diameter $D_{trailing}$ (8) of the section of the driving surface (3) taken at the trailing edge is such that .

14. Blade according to either one of claims 12 or 13, wherein for a diameter $D_{leading}$ (7) of the section of the driving surface (3) taken at the leading edge, the chord between the leading edge (4) and the trailing edge (5) has a length L such that: $D_{leading} \cdot 3.5 \leq L \leq D_{leading} \cdot 4.5$.

15. Device for generating energy from a fluid comprising a rotor having at least one blade (2) according to any one of the preceding claims.

**Patentansprüche**

1. Schaufel (2) für eine Vorrichtung zur Erzeugung von Energie aus einem Fluid, enthaltend eine Antriebsfläche (3),

- in deren Inneren ein Fluid dazu bestimmt ist zu fließen, um die Schaufel (2) in Drehung um eine Drehachse $\overrightarrow{Y_0}$, $\overrightarrow{Z_0}$ anzutreiben, die mit den Achsen $\overrightarrow{X_0}$ ein orthogonales Koordinatensystem $\overrightarrow{X_0}$, $\overrightarrow{Y_0}$, $\overrightarrow{Z_0}$ definiert,
- die durch eine Vorderkante (4) und eine Hinterkante (5) begrenzt ist,
- die sich zwischen der Vorderkante (4) und der Hinterkante (5) verjüngt,
- die sich entlang einer Mittellinie (10) erstreckt,

**dadurch gekennzeichnet, dass** die Projektion der Mittellinie (10) auf die Ebene $\overrightarrow{X_0}$, $\overrightarrow{Y_0}$ eine erste Krümmung aufweist, die so angeordnet ist, dass sich die Mittellinie in der Ebene $\overrightarrow{X_0}$, $\overrightarrow{Y_0}$ von der Vorderkante zur Hinterkante

von der Drehachse $\overrightarrow{X_0}$ entfernt oder sich an sie annähert, wobei die Ebene $\overrightarrow{X_0}$, $\overrightarrow{Y_0}$ so definiert ist, dass sie die Mittellinie (10) auf der Ebene der Vorderkante (4) enthält.

2. Schaufel (2) nach dem vorhergehenden Anspruch, bei welcher die Projektion der Mittellinie (10) auf die Ebene $\overrightarrow{Z_0}$, $\overrightarrow{X_0}$ eine zweite Krümmung aufweist.

3. Schaufel (2) nach einem der Ansprüche 1 oder 2, bei welcher die Mittellinie (10) in einer Ebene P enthalten ist, die in Bezug auf die Ebene $\overrightarrow{X_0}$, $\overrightarrow{Y_0}$ in einem Winkel d geneigt ist.

4. Schaufel (2) nach dem vorhergehenden Anspruch, bei welcher der Winkel d zwischen 50° und 90° liegt und bevorzugt zwischen 55° und 65°.

5. Schaufel (2) nach einem der Ansprüche 3 oder 4, bei welcher die Ebene P im Wesentlichen parallel zur Achse $\overrightarrow{X_0}$ verläuft.

6. Schaufel (2) nach einem der Ansprüche 3 bis 5, bei welcher die Mittellinie in der Ebene P eine Hauptkrümmung mit konstantem Radius aufweist.

7. Schaufel (2) nach einem der vorhergehenden Ansprüche, bei welcher die Mittellinie (10) einen Punkt A auf der Ebene der Vorderkante, einen in der Ebene $\overrightarrow{X_0}$, $\overrightarrow{Y_0}$ enthaltenen Punkt B und einen Punkt C auf der Ebene der Hinterkante (5) umfasst, so dass die Abschnitte AB und BC der Mittellinie , die jeweils durch die Punkte A und B bzw. durch die Punkte B und C begrenzt sind, zu beiden Seiten der Ebene $\overrightarrow{X_0}$, $\overrightarrow{Y_0}$ liegen, wobei der Abschnitt AB der Mittellinie (10) in Bezug auf die Ebene $\overrightarrow{X_0}$, $\overrightarrow{Y_0}$ eine zwischen 10% und 15% liegende Vertiefung definiert.

8. Schaufel (2) nach einem der vorhergehenden Ansprüche, bei welcher die Antriebsfläche (3) eine Verwindung um die Mittellinie aufweist.

9. Schaufel (2) nach dem vorhergehenden Anspruch in Kombination mit Anspruch 7, bei welcher die Antriebsfläche (3) auf dem Abschnitt BC eine Verwindung zwischen 40° und 80° und bevorzugt in der Größenordnung von 60° um die Mittellinie (10) aufweist und auf dem Abschnitt AB keine Verwindung aufweist.

10. Schaufel (2) nach einem der vorhergehenden Ansprüche, bei welcher die Antriebsfläche (3) eine Öffnung (6) umfasst, die sich im Wesentlichen parallel zur Mittellinie (10) erstreckt.

11. Schaufel (2) nach den Ansprüchen 5 und 8, bei welcher in jedem Punkt $p_i$ der Mittellinie (10) der Querschnitt der Antriebsfläche (3), der in einer zur Ebene P senkrechten Ebene $\overrightarrow{y_i}$, $\overrightarrow{z_i}$ liegt, eine Symmetrie in Bezug auf eine Ebene $\overrightarrow{z_i}$, $\overrightarrow{x_i}$ aufweist, wobei die Ebenen durch ein ein orthogonales Koordinatensystem, $\overrightarrow{x_i}$, $\overrightarrow{y_i}$ , $\overrightarrow{z_i}$ definiert sind, dessen Mittelpunkt mit dem Punkt $p_i$ verschmilzt, wobei die Achse $\overrightarrow{x_i}$ mit der Tangente zu der Mittellinie (10) am Punkt $p_i$ zusammenfällt und zur Hinterkante (5) hin ausgerichtet ist und wobei die Achsen $\overrightarrow{y_i}$, $\overrightarrow{z_i}$ der Verwindung folgen.

12. Schaufel (2) nach dem vorhergehenden Anspruch, bei welcher der Querschnitt der Antriebsfläche (3) im Wesentlichen die Form eines Kreisabschnitts aufweist.

13. Schaufel (2) nach dem vorhergehenden Anspruch, bei welcher für einen Durchmesser $D_{Vorderkante}$ (7) des Querschnitts der Antriebsfläche (3) in der Ebene der Vorderkante (4) der Durchmesser $D_{Hinterkante}$ (8) des Querschnitts der Antriebsfläche (3) in der Ebene der Hinterkante dergestalt ist, dass

13

$$\frac{D_{Vorderkante}}{3,5} \leq D_{Hinterkante} \leq \frac{D_{Vorderkante}}{2,5} \text{ gilt.}$$

14. Schaufel nach einem der Ansprüche 12 oder 13, bei welcher für einen Durchmesser $D_{Vorderkante}$ (7) des Abschnitts der Antriebsfläche (3) in der Ebene der Vorderkante die Kreissehne zwischen der Vorderkante (4) und der Hinterkante (5) eine Länge L (9) aufweist, die $D_{Vorderkante} \cdot 3,5 \leq L \leq D_{Vorderkante} \cdot 4,5$ entspricht.

15. Vorrichtung zur Erzeugung von Energie aus einem Fluid, die einen Rotor umfasst, der mindestens eine Schaufel (2) nach einem der vorhergehenden Ansprüche aufweist.

EP 2 294 313 B1

FIG.1

15

FIG.2

FIG.3

FIG.4

FIG. 5

FIG.6

FIG.7

FIG 8

## RÉFÉRENCES CITÉES DANS LA DESCRIPTION

**Documents brevets cités dans la description**

- FR 2872867 A
- FR 2872867